# EUROPEAN PATENT SPECIFICATION

(11) **EP 3 083 845 B1**
(45) Date of publication and mention of the grant of the patent: **15.07.2020**
(21) Application number: 14871962.8
(22) Date of filing: 19.12.2014
(51) Int. Cl.: C09D 5/00, C08J 7/04, D21H 19/40, D21H 19/58, D21H 19/60, D21H 19/72

(54) **COATING COMPOSITIONS FOR BUILDING MATERIALS AND COATED BUILDING MATERIAL SUBSTRATES**
BESCHICHTUNGSZUSAMMENSETZUNGEN FÜR BAUMATERIALIEN UND BESCHICHTETE BAUMATERIALSUBSTRATE
COMPOSITIONS DE REVÊTEMENT POUR MATÉRIAUX DE CONSTRUCTION ET SUBSTRATS DE MATÉRIAUX DE CONSTRUCTION REVÊTUS

(30) Priority: 19.12.2013 US 201361918521 P
(43) Date of publication of application: 26.10.2016
(73) Proprietor: Certainteed Corporation, Valley Forge, PA 19482 (US)
(72) Inventor: PEET, Jeffrey, H., Southborough, MA 01772 (US); YUAN, Sam, Lansdale, PA 19446 (US); COOGAN, Timothy, J., West Boylston, MA 01583 (US)
(74) Representative: Saint-Gobain Recherche
(86) International application number: PCT/US2014/071652
(87) International publication number: WO 2015/095786

(56) References cited:
- WO-A1-03/078734
- WO-A1-2008/119887
- WO-A1-2011/139481
- WO-A1-2013/164646
- US-A1- 2007 015 424
- US-A1- 2007 283 652
- US-A1- 2008 311 813
- US-A1- 2010 203 790
- US-A1- 2012 231 170

## Description

### TECHNOLOGICAL

### FIELD

This application is related to coatings for building materials. More particularly, certain embodiments described herein are directed to coatings effective to provide a coated substrate to have variable water vapor permeance values as a function of relative humidity (RH).

### BACKGROUND

Building materials can include films or facing materials attached to them to provide desired physical properties. The film or facing material typically includes petroleum products, which can result in substantial off-gassing of volatile organic compounds (VOCs) during preparation and/or use of the material.

Currently available products suffer from the ability to maintain desired water vapor permeance at a low relative humidity. Moreover, current coating formulations can not be used with porous substrates, such as porous nonwovens. Innovative solutions are therefore needed to provide novel coating compositions which can be used on a variety of different substrates, including, for example, porous substrates and in particular porous nonwoven substrates, while providing desired water vapor permeance, particularly at low relative humidity.

### BRIEF DESCRIPTION OF THE FIGURES

Certain embodiments are described with reference to the accompanying figures in which:
FIG. 1 illustrates a coated substrate according to one embodiment of the present disclosure.
FIG. 2 illustrates a coated substrate where the coating penetrates a particular depth into the substrate according to one embodiment of the present disclosure.
FIG. 3 illustrates a graph of the viscosity measurements of Example 3.

It will be recognized by the person of ordinary skill in the art, given the benefit of this disclosure, that certain dimensions or features in the figures may have been enlarged, distorted or shown in an otherwise unconventional or non-proportional manner to provide a more user-friendly version of the figures. Where dimensions or values are specified in the description below, the dimensions or values are provided for illustrative purposes only. Reference to front, back, top and bottom are provided for exemplary purposes and are not limiting.

### DETAILED DESCRIPTION

In general, the present disclosure is directed to a coating composition for building material substrates and coated substrates which can selectively retard water vapor as a function of humidity when cured. These concepts are better understood in view of the foregoing description.

The coating composition includes a hydrophobic component and a hydrophilic component. The hydrophobic component includes a water insoluble polymer.

The water insoluble polymer is provided to the coating composition as an aqueous dispersion such that the water insoluble polymer is dispersed in water.

The hydrophobic component includes a styrene butadiene latex.

The hydrophobic component can be described by its % carboxylation. % Carboxylation refers to the weight percentage of carboxylic acid monomer in the polymer backbone. Accordingly, the hydrophobic component has a % carboxylation of from 0% to 20%.

A particular advantage of the above mentioned % carboxylation has been shown to be advantageous in achieving excellent permeance with relative humidity in combination with a hydrophilic component. Without wishing to be bound by theory, it is believed that at high levels of carboxylation the latexes tend to have too high a water vapor permeance at intermediate relative humidities.

In certain embodiments, the hydrophobic component can be described by its glass transition temperature (Tg). As used herein, the glass transition temperature (Tg) of the hydrophobic component is measured according to differential scanning calorimetry or dynamic mechanical analysis. Accordingly, in certain embodiments, the hydrophobic component can have a glass transition temperature (Tg) of at least about -50 °C, at least about -40 °C, or even at least about -30 °C. In further embodiments, the hydrophobic component can have a glass transition temperature (Tg) of no greater than about 35 °C, no greater than about 25 °C, no greater than about 25 °C or even no greater than about 15 °C. Moreover, the hydrophobic component can have a glass transition temperature in a range of any of the minimums and maximums provided above, such as in a range of from -30 to 25 °C, -30 to 15 °C, or even -30 to 0 °C.

In certain embodiments, the hydrophobic component is present in the composition or barrier layer in an amount of 25 wt.% to 98 wt.% based on the total dry weight of the hydrophobic & hydrophilic components of the barrier layer.

As mentioned above, in addition to the hydrophobic component, the composition contains a hydrophilic component. The hydrophilic component can serve to absorb moisture and increase the permeance of the composition at elevated relative humidity. The hydrophilic component includes a polymer which, in the absence of cross-linking, is soluble in water.

The hydrophilic component includes polyvinyl alcohol (PVOH) or sodium polyacrylate.

The composition includes more than one hydrophilic component. The composition includes a hydrophilic filler in addition to the hydrophilic component options mention above, such as PVOH. The hydrophilic filler is Kaolin clay.

In certain embodiments, the hydrophilic components can be described by its % water absorption. As used herein, the % water absorption is determined by gravimetric measurements as is well understood in the art. Percentage of water absorption will increase the permeance vs. relative humidity relationship, but if it is too high the hydrophilic component may become soluble and destabilize the film.

In certain embodiments, the hydrophilic component can include a polymer having a percent water absorption of at least about 0.5%, at least about 2%, at least about 5%, or even at least about 7% as measured at 100% relative humidity and at 23 °C. In further embodiments, the hydrophilic component can include a polymer having a percent water absorption of no greater than about 20%, no greater than about 15%, or even no greater than about 10% as measured at 100% relative humidity and at 25 °C. Moreover, the hydrophilic component can have a percent water absorption in a range of any of the minimums and maximums provided above, such as in a range of from about 0.5% to about 20%, or even about 7% to about 10%.

In certain embodiments, the hydrophilic component can be described by its molecular weight. By using a high molecular weight material which is only soluble at high temperature, dissolution of the hydrophilic component at low temperatures can be avoided.

In certain embodiments, the hydrophilic component can have a weight average molecular weight of at least about 50000. In further embodiments, the hydrophilic component can have a molecular weight of no greater than about 300000. Moreover, the hydrophilic component can have a molecular weight in a range of any of the minimums and maximums provided above, such as in a range of from 50000 to 300000.

In certain embodiments, the composition can optionally further include desired additive components, such as inorganic fillers, viscosity modifiers, pigments, dyes, UV absorbers, slip additives, surfactants, biocides, defoamers, deaerators, or combinations thereof.

In particular embodiments, the composition can include a filler. In very particular embodiments, the composition can have a filler content of no greater than about the critical pigment volume concentration of the filler. For example, the critical pigment volume concentration of the filler is the concentration above which the binder does not fully occupy the voids between the pigment particles. For example, it can be measured by oil absorption of the pigment. The CPVC can vary from 20-68 volume percent, but the values are commonly around 50-55%.

In certain embodiments, the filler can include a clay, a montmorillonite, a calcium carbonate, a barium sulfate, a bentonite, a muscovite, an illite, a cookeite, a kaolonite, a chlorite or other filler materials. The filler may comprise inorganic materials, organic materials or combinations thereof. Specific fillers can include kaolin clay, CaCO3, CaSO4, BaSO4, silica, talc, carbon black, diatomaceous earth, alumina, titania, or combinations thereof. In some preferred embodiments, fillers with platelike morphologies such as Kaolin clay can increase the slope of the permeance vs relative humidity relationship. This is due to the increased tortuosity of the films and can allow coatings to be applied thinner and have superior performance. In some examples, the filler may provide reinforcement in the cured coating, may provide flame retardancy in the cured coating, may improve the physical properties of the cured composition (e.g., decrease the coefficient of linear thermal expansion (CLTE) as compared to the CLTE of a cured composition without the filler), or may provide other desired features, e.g., may increase the overall viscosity of the composition to facilitate more uniform coating on a substrate. Illustrative commercially available fillers include, but are not limited to, Bentolite®, Cloisite®, Nanofil®, Nanothix®, and Permont® fillers available from Southern Clay Products, Inc.

In certain embodiments, the filler can be present in the composition in a range of from 0 wt% to 85 wt%, based on the total dry weight of the composition or barrier layer.

In certain examples, the dispersions can include one or more biocidal agents. The biocidal agent can be effective to deter or prevent growth of organisms on the coating and/or surface of the substrate. In some embodiments, the biocidal agent can be effective as a fungicide, e.g., a moldicide, to prevent growth of mold or other fungus on the surface of the substrate. In other embodiments, the biocidal agent can be effective to prevent growth of bacteria, moss, algae or other organisms on the surface of the substrate. Where present, the biocidal agent may be present in an effective amount to deter or prevent growth of bio organisms.

In some embodiments, the dispersions can include stain-resistance additives. In some examples, the stain-resistance additive can act to reduce or prevent materials from being adsorbed into the coating and can generally assist in sealing the coating from penetration by materials other than water and gases. For example, the stain-resistance additive can provide oil resistance or oil repellency to prevent non-polar species from becoming trapped in the coating. The stain-resistance additives may also inhibit fading of the coating if exposed to heat, ultraviolet light or other forms of energy. Illustrative stain-resistance additives are commercially available, for example, from 3M (e.g., SRC-220, PM-5000, PM-1680, PM-4800) and AkzoNobel (e.g., Elotex® stain-resistance additives).

Describing the composition as a whole, the composition can have a particular ratio of the wt.% of the hydrophobic component to the hydrophilic component. For example, in certain embodiments, the ratio of the volume % of the hydrophobic component to the hydrophilic component can be at least about 3:1, at least about 10:1, or even at least about 30:1. In further embodiments, the ratio of the volume % of the hydrophobic component to the hydrophilic component can be no greater than about 200:1, or even no greater than about 100:1. Moreover, the ratio of the volume % of the hydrophobic component to the hydrophilic component can be in a range of any of the minimums and maximums provided above, such as in a range of from about 2:1 to about 200:1.

The composition can also have a desirable viscosity. For example, in particular embodiments, the composition can have a viscosity of at least about 1000 cps at a shear rate of 1 s⁻¹ at a temperature of 21 °C. In further embodiments, the composition can have a viscosity of no greater than about 1000 cps at a shear rate of 1000 s⁻¹ at a temperature of 21 °C. Moreover, the composition can have a viscosity of at least about 5000 cps at a shear rate of 1 s⁻¹ at a temperature of 21 °C and a viscosity of no greater than about 1000 cps at a shear rate of 1000 s⁻¹ at a temperature of 21 °C.

The composition can also be described by properties after curing. As used herein, the cured composition is referred to the barrier layer. In particular embodiments, the barrier layer can have a particular coat weight. The barrier layer has a coat weight of from about 10 gsm to about 120 gsm, or even from about 40 gsm to about 100 gsm.

The composition can be applied and cured and contain a variable water vapor permeability as a function of relative humidity. As discussed herein, the water vapor permeability can be measured according to ASTM E96 at a temperature of 21 °C at the selected average relative humidity (RH) values. The water vapor permeability is a measure of the amount of water vapor that can pass through a material. When used to describe a characteristic of a cured composition, the water vapor permeability is measured by coating the composition onto a point-bond polypropylene non-woven substrate with a coating weight of 75 gsm, and curing the composition. This way, the variable water vapor permeability can be standardized to a particular substrate for comparison and evaluation. The water vapor permeability is then measured according to ASTM E96 at a temperature of 21 °C at different relative humidities. Accordingly, in certain embodiments, the composition can be adapted to have a variable water vapor permeability as a function of relative humidity after applying and curing the composition onto a substrate.

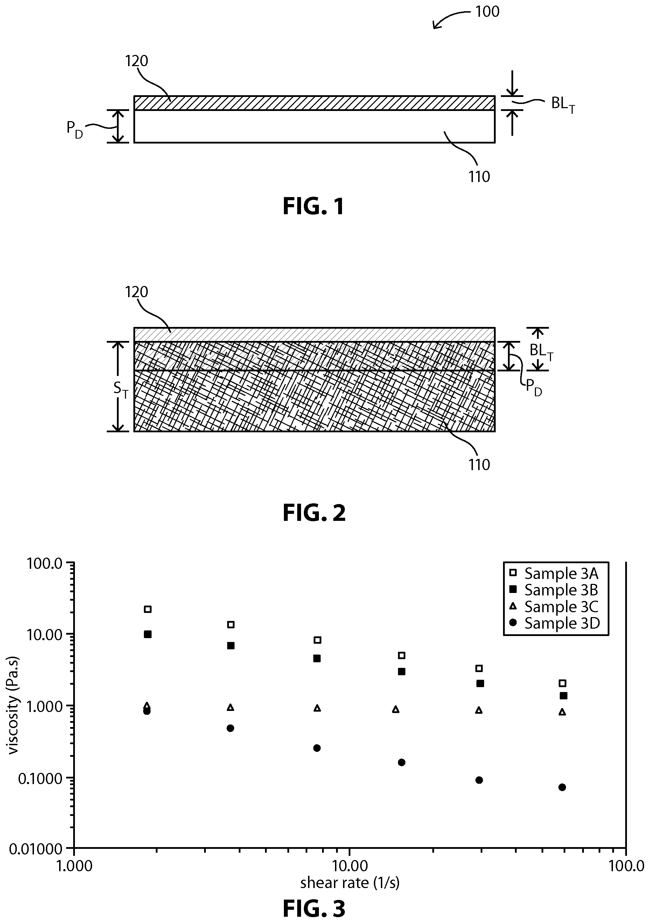

The aqueous dispersions described herein can be used to provide a cured coating on a building substrate, e.g., kraft paper used for backing on fiberglass insulation, spun bond or point bond non-woven fabrics, oriented strand board or as a coating on a house wrap or other material used that can be used to seal a building envelope, such as gypsum. Referring to FIG. 1, an article 100 is shown comprising a substrate 110 with a coating 120 disposed thereon. The exact thickness of the substrate 110 and the coating 120 can vary, but in most cases the thickness of the substrate 110 will be substantially larger than the thickness of the coating 120. While the thickness of the coating 120 is shown as being substantially the same in the planar direction of the substrate 110, such uniformity is not required. In particular, so long as the thickness of the coating 120 is effective to provide the variable water vapor perm values described herein, the thickness need not be uniform in every area of the substrate 110.

In certain embodiments, the substrate 110 can be any suitable substrate commonly used in the building industry. For example, buildings typically have some form of insulation in the wall, floor and/or ceiling cavities. This insulation is often fiberglass insulation that can include a vapor retarder to prevent moisture from entering the insulated cavities. Common vapor retarders are kraft paper coated with asphalt. Kraft paper itself has a high rate of moisture transmission. When used with an asphalt coating and/or adhesive, the kraft paper can act as a suitable vapor retarder. Reduced moisture in the wall cavity can prevent deterioration of the building materials and a reduction in the thermal conductivity within the wall cavity, which can further assist in reduction of energy costs. In some instances, the substrate 110 may be kraft paper that can be applied to a larger building substrate, e.g., fiberglass insulation, using an adhesive or other suitable attachment means. The exact weight of the kraft paper can vary, and illustrative weights include, but are not limited to, about 25 pounds to about 75 pounds per thousand square feet, for example about 39 pounds. In some examples the substrate 110 is a fabric. In some examples the fabric could be woven or non-woven. In other instances, the coating can be applied directly to drywall or other materials commonly used to finish interior surfaces of a building structure. For example, gypsum boards can be coated with the coating to provide a gypsum wallboard with variable water perm ratings. Similarly, wood paneling, wood planks, plywood, fiber board or other materials used to finish exterior or interior walls or ceilings can be coated with the coating described herein to provide variable water vapor perm ratings. Additional building substrates that can be coated with the coating will be readily selected by the person of ordinary skill in the art, given the benefit of this disclosure.

In very particular embodiments, the substrate can include a kraft paper facing, a scrim, a polymer sheet, a gypsum wall board, or combinations thereof. In further particular embodiments, the substrate can be described as a synthetic substrate. Further, the substrate can be porous or contain a pore structure, such that the coating composition or barrier layer can be disposed within the pore structure of the substrate as will be discussed in more detail below. In very specific embodiments, the substrate can include a fabric, such as a synthetic fabric that has a pore structure as described herein.

In certain embodiments, the coating 110 can be disposed on the substrate 120 by rolling, spraying, roll coating or other means that can dispose a layer of the aqueous dispersion on the substrate. If desired, additional coating layers can be added to a cured coating layer to build up the thickness of the layers of the coating.

In particular embodiments, the substrate can include kraft paper facing.

In certain embodiments, the substrate can be a textile substrate. For example, a textile substrate can include woven and/or non-woven materials. In particular embodiments, the substrate can include a non-woven material. Particular non-woven materials can include spun bond or point bond fabrics.

In certain examples, the coatings provided herein can be used either to provide pre-coated building substrates or to permit on-site coating of building substrates. For example, fiberglass insulation batts with kraft paper can be pre-coated with one or more of the components followed by coating of an additional component on-site to provide the final operative coating. In other instances, the coating can be produced at the production site such that an installer need not do anything to provide the coating. In yet other cases, the installer may spray the coating onto a substrate after it has been installed to provide the coating on the installed substrate. In some instances, the substrate may be a porous substrate, such as a non-woven substrate.

In certain embodiments, the coated substrate can have certain desired characteristics.

In particular embodiments, the combined thickness of the substrate and the barrier layer can be at least about 25 microns, at least about 50 microns, or even at least about 100 microns. In further embodiments, the combined thickness of the substrate and the barrier layer can be no greater than about 1000 microns, no greater than about 800 microns, or even no greater than about 750 microns. Moreover, the combined thickness of the substrate and the barrier layer can be in a range of any of the minimums and maximums provided above, such as in a range of from 25 microns to 1000 microns.

In certain embodiments, and referring in particular to FIG. 2, when the composition is coated and cured onto a relatively porous substrate 110, the barrier layer 120 can penetrate a desired depth P_{D} into the substrate, and in particular embodiments, cannot bleed through the entire substrate. For example, in certain embodiments, the substrate thickness ST can be greater than P_{D} such that one major surface of the substrate is essentially free of the barrier layer. Further, the barrier layer can have a thickness BL_{T} as indicated in FIG. 3 measured from the outermost surface of the barrier layer to the distance the barrier layer penetrates into the substrate.

Accordingly, in particular embodiments, the barrier layer can penetrate into the substrate by at least about 1%, at least about 5%, or even at least about 10% of the thickness of the substrate. In further embodiments, the barrier layer can penetrate into the substrate by no more than 95%, no more than 90%, or even no more than 85% of the thickness of the substrate.

Further, in particular embodiments, the barrier layer can penetrate into the substrate by at least about 1%, at least about 5%, or even at least about 10% of the thickness of the barrier layer. In further embodiments, the barrier layer can penetrate into the substrate by no more than 95%, no more than 90%, or even no more than 85% of the thickness of the barrier layer.

In other embodiments, the substrate can be completely saturated such that a continuous layer of the composition is disposed on both major surfaces of the substrate. For example, the P_{D} can be greater than or equal to the ST. Further, the barrier layer can have a desirable thickness atop both major surfaces of the substrate.

Embodiments of the present disclosure can exhibit a very advantageous variable water vapor permeability which varies as a function of the relative humidity. Similar to the discussion above in relation to the composition, the coated article including the substrate and the composition can exhibit a desirable water vapor permeability at low, medium, and high relative humidities. As used herein the water vapor permeability is measured according to ASTM E96 at a temperature of 21 °C.

The coated article can have a water vapor perm rating of about 5.72x10⁻⁸ g/Pa.s.m² (1 perm) or less at 25% average RH.

The coated article can have a water vapor permeability rating of at least about 85.8x10⁻⁸ g/Pa.s.m² (15 perms) at 95% average RH, or even at least about 20 perms. In particular embodiments, the coated article can have a water vapor perm rating of at least about 114.4x10⁻⁸ g/Pa.s.m² (20 perms) at 95 % average RH.

The coated article can have a water vapor permeability rating of 14.3x10⁻⁸ g/Pa.s.m² (2.5 perms) or less at 45% average RH.

In further embodiments, the coated article can have a water vapor permeability rating in a range of from 34.3x10⁻⁸ g/Pa.s.m² and 68.6x10⁻⁸ g/Pa.s.m² (6 perms to 12 perms) at 75% average RH. The coated article can further have various combinations of the water vapor permeability values provided above at the different relative humidities.

It is further noted that when a coating displays the water vapor perm rating noted above at different RH values, the change in perm rating as humidity increases may, as noted herein, be linear or non-linear as a function of the logarithm of permeance versus relative humidity. Another parameter of the article is the achievement of an advantageous nail tear resistance. The nail tear resistance is a measure of the article's ability to prevent tearing after a puncture. As used herein, the nail tear resistance is measured according to EIN 12310-1. Accordingly, the coated article can have a nail tear resistance of at least about 1 N/5cm, at least about 5 N/5cm, or even at least about 10 N/5cm.

Yet another parameter of the article is its tensile strength. As used herein, tensile strength is measured according to EIN 12311-2. Accordingly, in certain embodiments, the coated article can have a tensile strength of at least about 10 N/5cm, at least about 25 N/5cm, or even at least about 40 N/5 cm. Further, in certain embodiments, the coated article can have a UV aged tensile strength of at least about 10 N/5cm, at least about 25 N/5cm, or even at least about 40 N/5 cm.

As used herein, UV aged tensile strength is measured after UV aging for 180 hours at 0.8 W/m2 Still yet another parameter to describe a characteristic of the article is its tape adhesion. Tape adhesion is a measure of the ability of the coated article to stick to and release from an adhesive tape. As used herein, tape adhesion is measured according to EIN 12317-2. Accordingly, the coated article can have a tape adhesion of at least about 15 N/5cm, at least about 20 N/5cm, or even at least about 25 N/5cm.

### Examples

### Example 1 - Permeance

Samples were prepared and tested for water vapor permeance values under ASTM E96 at 21 °C and at relative humilities of 25% RH, 45% RH, 75% RH, and 95% RH.

Samples for water vapor permeance tested were prepared by mixing the ingredients with an air powered cowles blade, or a homogenizer, or by hand for 5 minutes at room temperature. The coatings were applied by wound wire rod (mayer rod) or by a slot die extrusion process at a thickness of approximately 75 microns.

The wt.% values illustrated for the hydrophobic and hydrophilic components are based on the total weight of the hydrophobic and hydrophilic components in the solid film. The wt.% values for the filler are based on total weight of the coating composition.

### Components

A - Styron DL-226 was obtained from Styron - This is a styrene-butadiene latex with a low degree of carboxylation and a glass transition temperature of -14 °C.
B - Styron DL-490 was obtained from Styron - This is a highly carboxylated styrene butadiene latex with a glass transition temperature of 9 °C.
C - PVOH Selvol 9-325 was obtained from Sekisui - This is a pre-dissolved PVOH at 8.5 % solids which is 98.4 % hydrolyzed with a high molecular weight.
D - PAA Acumer 1510 was obtained from Dow - This is a 25% solids polyacrylic acid.
E - Kaolin clay was obtained from Sigma Aldrich
NW - nonwoven substrate obtained from Hanes under the trade name designation Elite.
SD - slot die coating process
MR - Mayer Rod coating process

**Table 1: Sample Formulations and Permeance Values**

| | Hydrophobic | | Hydrophilic | | Filler | Substrate | Process | Permeance (perms)* | | | |
|---|---|---|---|---|---|---|---|---|---|---|---|
| Sample | A | B | c | D | E | | | 25% | 45% | 75% | 95% |
| 1 (comp) | 96 | | 4 | | | NW | SD | | 2 | 3.4 | 5.3 |
| 2 (comp) | 95 | | 5 | | | NW | SD | 1.3 | 3 | 11.7 | 25.1 |
| 3 (comp) | 94 | | 6 | | | NW | SD | 1.2 | 3.3 | 16.8 | 43 |
| 4 (comp) | | 95 | 5 | | | NW | SD | 0.8 | 15.6 | 55.8 | 152.3 |
| 5 (comp) | 95 | | 5 | | | NW | MR | 1 | 2.7 | 12.5 | 31.6 |
| 6 (comp) | 95 | | | 5 | | NW | MR | 1 | 1.7 | 3.1 | 4 |
| 7 (invention) | 94 | | 6 | | 33 | NW | MR | 0.39 | 0.76 | 7.2 | 27 |
| 8 (invention) | 94 | | 6 | | 33 | Kraft | MR | 0.5 | 1.1 | 6 | 26 |
| 9 (invention) | 94 | | 6 | | 40 | NW | MR | 0.32 | 1.5 | 8.2 | 34 |
| 10(invention) | 94 | | 6 | | 47 | NW | MR | 0.28 | 1.5 | 9.1 | 38 |
| 11 (invention) | 94 | | 6 | | 55 | NW | MR | 0.2 | 1.5 | 9.6 | 41 |
| 12 (comp) | | | 100 | | | Kraft | MR | 0 | 21 | 50 | 156 |
| 13 (comp) | | | | 100 | | Kraft | MR | 0.8 | 23 | 74 | 142 |
| 14 (comp) | 100 | | | | | Kraft | MR | 1.4 | 3.7 | 9 | 20 |
| 15 (comp) | | 100 | | | | Kraft | MR | 0.9 | 16 | 40 | 116 |
| 16 (comp) | | | | | | Nylon 2 mil a BB | - | 0.8 | 2.4 | 11.9 | 37.1 |

| | | | | | | | | | | | |
|---|---|---|---|---|---|---|---|---|---|---|---|
| * 1 perm = 5.72x10⁻⁸ g/Pa.s.m² | | | | | | | | | | | |

As illustrated above, multiple coated substrates exhibit desirable permeance values comparable to that of the comparative Nylon 2 mil film (Sample 16), and even better than the Nylon 2 mil film. Specifically, sample 9 performs almost exactly as does Sample 16, except that
it is more closed at 25% humidity and more open at 95% humidity, both of which are preferable and improvements over the Nylon 2 mil film.

As an illustrative example of a particular advantage of certain embodiments of the present disclosure, namely the particular component ratios, comparing the permeance profiles of samples 1, 2, and 3 from the table, it is clear that the slope increases dramatically as you increase the hydrophilic component.

As an illustrative example of a particular advantage of certain embodiments of the present disclosure, namely the particular materials selected, comparing the permeance profiles of samples 2 and 4 from the table, it is clear that the selection of hydrophobic material can have a significant impact on the permeance profile.

As an illustrative example of a particular advantage of certain embodiments of the present disclosure, namely the particular materials selected, comparing the permeance profiles of samples 5 and 6 from the table, it is clear that the hydrophilic component C is far more effective at tailoring the permeance profile than hydrophilic component D.

As an illustrative example of a particular advantage of certain embodiments of the present disclosure, namely the filler selection, comparing the permeance profiles of samples 3, 7, 9, 10, and 11 from the table, it is clear that the incorporation of the kaolin filler significantly increased the barrier properties at low humidity and increased the vapor permeance at high humidity.

As an illustrative example of a particular advantage of certain embodiments of the present disclosure, comparing the permeance profile of sample 16 to that of the individual components (i.e. samples 12, 13, 14, and 15) from the table, it is clear that none of the components can individually match the performance of nylon.

As an illustrative example of a particular advantage of certain embodiments of the present disclosure, comparing the permeance profile of sample 9 to that of the individual components (samples 12 and 14) from the table, it is clear that none of the components can individually match the performance of Sample 9. Accordingly, sample 9 illustrates the synergistic improvement in the permeance profiles in comparison to the individual components separately. This synergism was entirely unexpected.

As an illustrative example of a particular advantage of certain embodiments of the present disclosure, it is clear from the permeance profile of Sample 15 that a highly carboxylated
latex can actually be hydrophilic enough to exhibit a strong dependence of permeance on RH; however, the permeance values of such materials at 45% humidity are too high to achieve the performance of Sample 16.

As an illustrative example of a particular advantage of certain embodiments of the present disclosure, namely the robustness of the coating, comparing the permeance profiles of samples 2 and 8 from the table, it is clear that the substrate selection has only a minor impact on performance if the substrate is more vapor open than the coating.

As an illustrative example of a particular advantage of certain embodiments of the present disclosure, namely the robustness of the coating, comparing the permeance profiles of samples 2 and 6 from the table, it is clear that the coating process has little impact on performance.

### Example 2: Mechanical Data

The following samples were prepared as follows:
Sample 2A: 94 wt.% of Styron DL-226 and 6 wt.% of PVOH-325, based on the total weight of these two components. The sample further included 33 wt.% of a Kaolin filler, based on the total weight of the composition. This was coated in the machine direction onto Hanes Elite 100 fabric.
Sample 2B: 94 wt.% of Styron DL-226 and 6 wt.% of PVOH-325, based on the total weight of these two components. The sample further included 33 wt.% of a Kaolin filler, based on the total weight of the composition. This was coated in the transverse direction onto Hanes Elite 200 Fabric.
Sample 2C: is a comparative example and include a 50 micron thick Vario KM film which was obtained from Saint-Gobain Corporation and was used as received.

The samples were then tested for initial tensile Strength, tensile strength after UV aging for 180 hours at 0.8 W/m2, and Nail Resistance according to the test methodology described above, with the following results being obtained:

**Table 2: Mechanical Performance**

| | 2A | 2B | 2C |
|---|---|---|---|
| Tensile (N/5cm) | 98 | 197 | 197 |
| Tensile UV Aged (N/5cm) | 65 | 88 | 64 |
| Nail Resistance (N/5cm) | 31 | 61 | 15 |

### Example 3: Viscosity Measurements

Three Samples were prepared as follows and measured for their viscosity before curing according to the methodology described herein:
Sample 3A: contained 95 wt.% of Styron DL-226 and 5 wt.% of PVOH-325, based on the total weight of these two components.
Sample 3B: contained 94 wt.% of Styron DL-226 and 6 wt.% of PVOH-325, based on the total weight of these two components. The sample further included 33 wt.% of a Kaolin filler, based on the total weight of the composition.
Sample 3C is a comparative sample and contained 100 wt.% of DL 226.
Sample 3D is a comparative sample and contained 100 wt.% of Selvol 9-325.

The results are reported in FIG. 3, which illustrates a graph of the viscosity measured in (Pa*s) at different shear rates measured in s⁻¹. As illustrated, the viscosities of Samples 3A and Sample 3B were significantly higher than the comparative Samples 3C and 3D.

## Claims

1. A coating composition adapted to selectively retard water vapor as a function of humidity when cured into a barrier layer, the composition comprising:
a. a hydrophobic component comprising a styrene butadiene latex with a % carboxylation of from 0 to 20 %;
b. a hydrophilic component comprising a polymer selected from polyvinyl alcohol and sodium polyacrylate and a hydrophilic filler selected from kaolin clay;
wherein the hydrophobic component is present in the composition in an amount of 25 wt% to 98 wt% based on the total dry weight of the hydrophobic and hydrophilic components.

2. The coating composition of claim 1, wherein the hydrophobic component has a glass transition temperature of from -30 °C to 0 °C.

3. The coating composition of claim 1, wherein the hydrophobic component is present in an amount of from 35 wt % to 97 wt % based on the total dry weight of the hydrophobic and hydrophilic components.

4. The coating composition of claim 1, wherein the polymer of the hydrophilic component has a weight average molecular weight of at least 50000 and no greater than 300000.

5. An article adapted to selectively retard water vapor as a function of humidity, the article comprising:
a. a building material substrate; and
b. a barrier layer disposed on the building material substrate, the barrier layer being obtained by curing of a coating composition according to any of claims 1 to 4,
the coat weight of the barrier layer being in the range of from 10 gsm to 120 gsm, and
the article having a variable water vapor perm rating of 5.72x10⁻⁸ g/Pa.s.m² (1 perm) or less at 25% average relative humidity (RH) and 85.8x10⁻⁸ g/Pa.s.m² (15 perms) or more at 95% average relative humidity (RH), as tested by ASTM E96 at 21 °C.

6. The article of claim 5, wherein the article has a water vapor perm rating of about 14.3x10⁻⁸ g/Pa.s.m² (2.5 perms) or less at 45% average RH and a water vapor perm rating of between 34.3x10⁻⁸ g/Pa.s.m² and 68.6x10⁻⁸ g/Pa.s.m² (6 and 12 perms) at 75% average RH as tested by ASTM E96 at 21 °C.

7. The article of claim 6, wherein the substrate comprises a kraft paper facing, a scrim, a polymer sheet, a gypsum wall board, or combinations thereof.

8. The article of claim 6, wherein the substrate comprises kraft paper applied to fibreglass insulation.

9. The article of claim 5, wherein the substrate comprises a woven or non- woven material.

10. The article of claim 9, wherein the substrate comprises a non-woven material comprising spun bond or point bond fabric.

11. The article of claim 5, wherein the substrate comprises a gypsum board.

12. The article of claim 5, wherein the barrier layer has a coat weight of at least 20 gsm.

## Patentansprüche

1. Beschichtungszusammensetzung, wenn sie zu einer Sperrschicht gehärtet ist, dafür ausgelegt ist, den Durchgang von Wasserdampf in Abhängigkeit von der Feuchtigkeit selektiv zu verzögern, wobei die Zusammensetzung umfasst:
a. eine hydrophobe Komponente, umfassend einen Styrol-Butadien-Latex mit einer %-Carboxylierung von 0 bis 20 %;
b. eine hydrophile Komponente, umfassend ein aus Polyvinylalkohol und Natriumpolyacrylat ausgewähltes Polymer und einen aus Kaolinton ausgewählten hydrophilen Füllstoff;
wobei die hydrophobe Komponente in der Zusammensetzung in einer Menge von 25 Gew.-% bis 98 Gew.-% vorhanden ist, bezogen auf das Gesamttrockengewicht der hydrophoben und hydrophilen Komponenten.

2. Beschichtungszusammensetzung nach Anspruch 1, wobei die hydrophobe Komponente eine Glasübergangstemperatur von -30 °C bis 0 °C aufweist.

3. Beschichtungszusammensetzung nach Anspruch 1, wobei die hydrophobe Komponente in einer Menge von 35 Gew.-% bis 97 Gew.-% vorhanden ist, bezogen auf das Gesamttrockengewicht der hydrophoben und hydrophilen Komponenten.

4. Beschichtungszusammensetzung nach Anspruch 1, wobei das Polymer der hydrophilen Komponente ein gewichtsmittleres Molekulargewicht von mindestens 50000 und nicht mehr als 300000 aufweist.

5. Artikel, der dafür ausgelegt ist, den Durchgang von Wasserdampf in Abhängigkeit von der Feuchtigkeit selektiv zu verzögern, wobei der Artikel umfasst:
a. ein Baumaterialsubstrat; und
b. eine Sperrschicht, die auf dem Baumaterialsubstrat angeordnet ist, wobei die Sperrschicht durch Aushärten einer Beschichtungszusammensetzung gemäß einem der Ansprüche 1 bis 4 erhalten wird,
wobei das Beschichtungsgewicht der Sperrschicht im Bereich von 10 g/m² bis 120 g/m² liegt und
der Artikel eine variable Wasserdampf-Perm-Bewertung von 5,72×10⁻⁸ g/Pa.s.m² (1 Perm) oder weniger bei 25% durchschnittlicher relativer Luftfeuchtigkeit (RH) und 85,8×10⁻⁸ g/Pa.s.m² (15 Perms) oder mehr bei 95 % durchschnittlicher relativer Luftfeuchtigkeit (RH) aufweist, wie durch ASTM E96 bei 21 °C getestet.

6. Artikel nach Anspruch 5, wobei der Artikel eine Wasserdampf-Perm-Bewertung von etwa 14,3×10⁻⁸ g/Pa.s.m² (2,5 Perms) oder weniger bei einer durchschnittlichen relativen Luftfeuchtigkeit (RH) von 45 % und einer Wasserdampf-Perm-Bewertung zwischen 34,3×10⁻⁸ g/Pa.s.m² und 68,6×10⁻⁸ g/Pa.s.m² (6 und 12 Perms) bei 75 % durchschnittlicher relativer Luftfeuchtigkeit (RH) aufweist, wie durch ASTM E96 bei 21 °C getestet.

7. Artikel nach Anspruch 6, wobei das Substrat einen Kraftpapierbelag, ein Gittergewebe, eine Polymerfolie, eine Gipsbauplatte oder Kombinationen davon umfasst.

8. Artikel nach Anspruch 6, wobei das Substrat Kraftpapier umfasst, das auf eine Glasfaserisolierung aufgebracht ist.

9. Artikel nach Anspruch 5, wobei das Substrat ein gewebtes Material oder Vliesmaterial umfasst.

10. Artikel nach Anspruch 9, wobei das Substrat ein Vliesmaterial umfasst, das Spinnvlies oder Punktbindungsgewebe umfasst.

11. Artikel nach Anspruch 5, wobei das Substrat eine Gipsplatte umfasst.

12. Artikel nach Anspruch 5, wobei die Sperrschicht ein Beschichtungsgewicht von mindestens 20 g/m² aufweist.

## Revendications

1. Composition de revêtement capable, après durcissement sous forme de couche barrière, de sélectivement retarder la vapeur d'eau en fonction de l'humidité, ladite composition comprenant
a. Un composant hydrophobe comprenant un latex styrène-butadiène avec un pourcentage de carboxylation allant de 0 à 20 %,
b. Un composant hydrophile comprenant un polymère choisi parmi le poly(alcool vinylique) et le poly(acrylate de sodium), et une charge hydrophile qui est du kaolin,
dans laquelle le composant hydrophobe est présent dans la composition en une quantité allant de 25 % en poids à 98 % en poids, rapporté au poids sec total des composants hydrophobes et hydrophiles.

2. Composition de revêtement selon la revendication 1, dans laquelle le composant hydrophobe a une température de transition vitreuse comprise entre -30 °C et 0 °C.

3. Composition de revêtement selon la revendication 1, dans laquelle le composant hydrophobe est présent en une quantité allant de 35 % en poids à 97 % en poids rapporté au poids sec total des composants hydrophobes et hydrophiles.

4. Composition de revêtement selon la revendication 1, dans laquelle le polymère du composant hydrophile a une masse moléculaire moyenne en poids au moins égale à 50 000 et n'excédant pas 300 000.

5. Article apte à retarder la vapeur d'eau sélectivement en fonction de l'humidité, l'article comprenant :
a. Un substrat en matériau de construction et
b. Une couche barrière disposée sur le substrat en matériau de construction, la couche barrière étant obtenue par durcissement d'une composition de revêtement selon l'une quelconque des revendications 1 à 4,
le poids de dépôt de la couche barrière étant compris entre 10 et 120 g par mètre carré, et l'article ayant une valeur de perméabilité à la vapeur d'eau variable inférieure ou égale à 5,72 x 10⁻⁸ g/Pa.s.m² (1 perm) pour une humidité relative (HR) moyenne de 25 % et supérieure ou égale à 85,8 x 10⁻⁸ g/Pa.s.m² (15 perms) pour une humidité relative (HR) moyenne de 95 %, déterminée selon ASTM E96 à 21 °C.

6. Article selon la revendication 5, dans lequel l'article a une perméabilité à la vapeur d'eau inférieure ou égale à environ 14,3 x 10⁻⁸ g/Pa.s.m² (2,5 perm) pour une HR moyenne de 45 % et une perméabilité à la vapeur comprise entre environ 34,3 x 10⁻⁸ g/Pa.s.m² et 68,6 x 10⁻⁸ g/Pa.s.m² (6 - 12 perms) pour une HR moyenne de 75 %, déterminée selon ASTM E96 à 21 °C.

7. Article selon la revendication 6, dans lequel le substrat comprend un surfaçage en papier kraft, une grille, une feuille polymère, une plaque de plâtre, ou une combinaison de ceux-ci.

8. Article selon la revendication 6, dans lequel le substrat comprend du papier kraft appliqué sur une isolation à base de fibres de verre.

9. Article selon la revendication 5, dans lequel le substrat comprend un matériau tissé ou non-tissé.

10. Article selon la revendication 9, dans lequel le substrat comprend un matériau non-tissé comprenant un textile filé-lié ou aiguilleté.

11. Article selon la revendication 5, dans lequel le substrat comprend une plaque de plâtre.

12. Article selon la revendication 5, dans lequel la couche barrière a une masse surfacique d'au moins 20 g par mètre carré.
